# EUROPEAN PATENT APPLICATION

(11) **EP 4 701 000 A1**
(43) Date of publication of application: **25.02.2026**
(21) Application number: 25195887.2
(22) Date of filing: 14.08.2025
(51) Int. Cl.: H01R 13/629, H01R 13/64

(54) **TELESCOPIC LEVER WITH CONNECTOR POSITION ASSURANCE (CPA) FUNCTION**

(30) Priority: 21.08.2024 IT 202400019141
(71) Applicant: TE Connectivity Italia Distribution S.r.l., 10093 Collegno (TO) (IT)
(72) Inventor: Di Maggio, Stanislas, 10093 Collegno (IT); Farinola, Marcello, 10093 Collegno (IT); Genta, Alessandro, 10093 Collegno (IT)
(74) Representative: Grünecker Patent- und Rechtsanwälte PartG mbB

(57) **Abstract**

The present invention concerns a lever 1 suitable to be mounted on a connector C, suitable to be connected to an interface I, for example, the AC inlet for charging an electric car; the lever 1 being suitable to ensure a stable electrical connection between the connector C and the interface I and comprising: two side walls 2, 3 parallel to each other and a bridge 4 joining the two side walls 2, 3; wherein the bridge 4 is connected to the two side walls 2, 3 in a telescopic manner, so that the lever 1 can move from an elongated configuration, in which it has a maximum length L_{MAX}, to a shortened configuration, in which it has a minimum length L_{MIN}, and wherein the lever 1 is suitable to rotate around the connector C, from a position perpendicular to the insertion direction Y of the interface I in the connector C, to a position parallel to the insertion direction Y of the interface I in the connector C.

## Description

The present invention concerns a lever for connecting a connector and an interface, for example of an electric car. More specifically, the present invention concerns a telescopic lever with a connector position assurance (CPA) function.

### STATE OF THE ART

A new recent application in the field of electrical vehicles consists in connecting the charging port of a vehicle using a plug connection system.

Indeed, the present invention relates to use of a plug connection system for the connection of the charging port of a vehicle to the vehicle harness. More in particular, the present invention relates to the lever of a connector of a plug connector system. In particular, this lever has the scope of satisfying two important customer requirements:
- mating force limit, in particular the mating force should not exceed a predetermined value, for example the mating force should not be greater than 100 N, preferably not greater than 75 N; and
- ensure a proper connection onto an interface of the vehicle, with the lever closed in its final position (Connector Positioning Assurance).

It is, therefore, the purpose of the present invention to provide a connector, to be connected to an interface, with a lever suitable to solve one or more of the above cited problems.

### SUMMARY

The present invention is based on the idea of providing a lever suitable to be mounted on a connector, suitable to be connected to an interface, such as the AC inlet for charging an electric car; the lever being suitable to ensure a stable electrical connection between the connector and the interface and comprising: two side walls parallel to each other and a bridge joining the two side walls; in which the bridge is telescopically connected to the two side walls, so that the lever can move from an elongated configuration, in which it has a maximum length, to a shortened configuration, in which it has a minimum length; and in which the lever is suitable to rotate around the connector, from a position perpendicular to the direction of insertion of the interface into the connector, to a position parallel to the direction of insertion of the interface into the connector.

A lever with these features is suitable to be applied to a compacted connector, , in order to be connected to an interface, which needs to respect mating force limit requested by customer. For this reasons, the lever rotates 90° around the connector in an elongated configuration, so that the operator can apply, through the rotation of the lever, sufficient force, proportional to the length of the lever, on the interface inserted into the connector, to bring the interface closer to/into the connector, until the two components are in electrical connection. Later, however, when the connector is electrically connected to the interface, the lever can be brought to the shortened configuration around the connector, thus, occupying less space and ensuring that the connector, to which it is attached, remains compact.

According to an embodiment of the present invention, each of the two side walls respectively includes a rail on which the bridge can slide to move from the elongated configuration to the shortened configuration.

The rail allows to make the lever telescopic, causing the bridge to slide on the side walls of the lever, lengthening and shortening it. The fact that the lever is telescopic, as already explained, is critical so that the lever mounted on the connector can apply sufficient force to the interface to ensure the electrical connection between connector and interface, while at the same time, ensuring the compactness of the connector.

According to a further embodiment of the present invention, each of the two side walls includes a fulcrum cavity suitable to allow the lever to be mounted on the connector and around which the lever can be rotated around the connector.

The lever is mounted on the connector by attaching the fulcrum cavities to the pivot means on the connector. The lever rotates around the connector by 90°, having the pivot means of the connector as the fulcrum of rotation. The fulcrum cavities, can have different shapes and/or sizes, depending on the shape and/or size of the pivot means of the connector.

According to a further embodiment of the present invention, each of the two side walls includes a cam, each of which is suitable, once the interface is inserted into the connector, to induce the movement in the direction of insertion of the interface into the connector, so as to allow the interface to approach the connector when the lever is rotated around the connector from the position perpendicular to the direction of insertion of the interface into the connector, to the position parallel to the direction of insertion of the interface into the connector.

The cams on the side walls of the lever allow the rotational movement of the lever around the connector to be transformed into a translator movement of the interface toward the connector in which it is inserted. In this way, the force applied by the operator on the lever to turn it is transformed into the force that pushes the interface into the connector, causing the two components to be brought into electrical connection.

According to a further embodiment of the present invention, the bridge includes two first stoppers, for example two flaps, and the two sidewalls respectively include two protruding portions, wherein the first stoppers are each respectively abutting against one of the protruding portions of the two sidewalls when the lever is in the elongated configuration, so as to prevent the accidental switching of the lever from the elongated configuration to the shortened configuration.

The first stoppers of the bridge and the protruding portions of the two side walls, respectively, ensure that the lever is in the elongated configuration when the lever is mounted on the connector at a position perpendicular to the direction of insertion of the interface into the connector. In fact, the lever, in the configuration in which it is supplied, is locked in translation and can be unlocked only after the lever has been rotated 90°, so that it reaches the position parallel to the direction of insertion of the interface into the connector. The closing the lever cannot, therefore, occur accidentally.

According to a further embodiment of the present invention, the bridge includes two second stoppers, for example the two peripheral walls of the bridge, each respectively abutting against the connector, when the connector is not connected to the interface; the second stoppers being suitable to prevent the rotation of the lever around the fulcrum cavities.

When the lever is mounted on the connector and before an interface is inserted into the connector, the second stoppers ensure, by abutting against special blocking surfaces of the connector, that the lever cannot rotate around the connector from the position perpendicular to the direction of insertion of the interface into the connector (configuration in which the lever on the connector is when supplied) to the position parallel to the direction of insertion of the interface into the connector.

The combined action of the first stoppers and the second stoppers ensures, therefore, that the lever mounted on the connector is in a position perpendicular to the direction of insertion of the interface into the connector, when supplied by the manufacture, and it can neither rotate around the connector, nor translate from the elongated configuration to the shortened configuration. These operations will be possible only after an interface has been inserted into the connector.

According to a further embodiment of the present invention, the bridge further includes locking means suitable to interact with the connector so as to tighten the lever in the shortened configuration.

Once the lever has been rotated 90° around the connector to a position parallel to the direction of insertion of the interface into the connector, the lever can be moved to the shortened configuration. To ensure that it can no longer move from this position, the locking means interact with the connector coupling element, locking the lever in the shortened configuration. When the lever is in this configuration, the interface is in electrical contact with the connector and the locking means ensure that the system remains that way even if it is subjected to severe vibration. A tool, such as a screwdriver, must be used to release the locking means. The release of the locking means cannot, therefore, occur accidentally.

The present invention further relates to a plug connection system comprising a connector suitable for the connection to an interface and a lever according to any of the embodiments described above; the plug connection systemcomprising: pivot means on which the lever can be inserted and suitable to allow the rotation of the lever around the connector; blocking surfaces suitable to block the rotation of the lever around the connector when the interface is not connected to the connector and the lever is in a position perpendicular to the direction of insertion; and release means, suitable to release the lever in translation when the lever is in a position perpendicular to the direction of insertion of the interface into the connector, so that the lever can switch from the elongated configuration to the shortened configuration.

The connector, in order for a lever of the described type to be advantageously mounted on it must include at least: pivot means, such as pins on which the fulcrum cavities of the lever engage and around which the lever can rotate from the position perpendicular to the direction of insertion of the interface into the connector, to the position parallel to the direction of insertion of the interface into the connector; locking surfaces, suitable to interact with the second stoppers of the lever, to ensure that the lever cannot rotate when the connector and lever are supplied by the manufacturer; and unlocking means suitable to interact with the first stoppers to unlock the lever so that it can move from the elongated configuration to the shortened configuration when it is in a position parallel to the direction of insertion of the interface into the connector.

According to a further embodiment of the present invention, the pivot means include pins on which the fulcrum cavities of the lever can be inserted.

The fulcrum cavities of the lever are inserted on the pins of the connector so that the lever can rotate around the connector.

According to a further embodiment of the present invention, each of the blocking surfaces includes slats suitable to engage against said second lever stoppers, respectively, when the interface is not connected to the connector.

The blocking surfaces can be slats abutted against the second lever stoppers, respectively, when the connector and lever are supplied by the manufacturer, so as to prevent accidental rotation of the lever before an interface is inserted into the connector.

According to a further embodiment of the present invention, the release means include protruding elements capable of lifting up the first stoppers.

The protruding elements of the connector allow the lever to be unlocked in translation, as they lift up the first stoppers of the lever bridge, when the lever is in a position parallel to the direction of insertion of the interface into the connector, so that they are no longer abutting against the protruding portions of the side walls of the lever. In this way, the lever can move from the elongated configuration to the shortened configuration.

According to a further embodiment of the present invention, the connector further includes two slots; the slots being suitable to intersect the cams of the side walls of the lever, respectively, so that when the lever is in the position perpendicular to the direction of insertion of the interface into the connector, the outer ends of the slots are in correspondence of the ends of the cams closest to the lever bridge, respectively, and when the lever is in the position parallel to the direction of insertion of the interface into the connector, the innermost ends of the slots are in correspondence of the ends of the cams farthest from the lever bridge, respectively.

This configuration of the slots and cams implies that the rotational movement of the lever around the connector from the position perpendicular to the direction of insertion of the interface into the connector corresponds to a translational movement of the interface toward the connector, along its insertion direction. More specifically, this is possible by the insertion means of the interface. These, integral with the interface, insert into the slots of the connector, are automatically pushed into the cams of the lever. When the lever is rotated, the cams push the insertion means inserted in them along the slots in the direction of insertion of the interface into the connector. When the lever has been turned 90° from its initial position, the insertion means of the interface arrive at the end of the stroke of the cams and at the innermost ends of the slots in the connector. The length of the cams and that of the slots is made so that when the insertion means are at the innermost ends of the slots and the ends of the cams furthest from the lever bridge, respectively, then the interface is inserted into the connector enough to ensure the electrical connection between the two components.

According to a further embodiment of the present invention, the connector includes a coupling element suitable to interact with the locking means so as to tighten the lever in the shortened configuration.

The locking means of the level interact with the coupling element so as to ensure that the lever can no longer move from the shortened configuration. The interface can thus remain in electrical connection with the connector, even when the system is in an environment subjected to severe vibration.

The present invention further concerns a connection assembly comprising a plug connection system according to one of the embodiments described above, wherein the interface comprises insertion means suitable to interact with the plug connection system, so that the interface moves from an initial position within the connector, when the lever is in a position perpendicular to the direction of insertion of the interface into the connector, to an end position, wherein the connector and the interface are electrically connected, when the lever is in a position parallel to the direction of insertion of the interface into the connector.

With the insertion means fitting into the cams of the lever and the slots of the connector, the rotary movement of the lever induces a translation of the interface in the direction of insertion of the interface into the connector. The rotation of the lever thus ensures the insertion of the interface into the connector. The length of the cams and slots is such that the electrical connection between the two components is also ensured.

According to a further embodiment of the present invention, the insertion means comprise two pegs suitable to be inserted into the slots of the connector and the cams of the lever, respectively, so that, when the lever is in the position perpendicular to the direction of insertion of the interface into the connector, the two pegs are respectively at the outer ends of the slots, in correspondence of the ends of the cams closest to the lever bridge and when the lever is in the position parallel to the direction of insertion of the interface into the connector, the pegs are respectively at the innermost ends of the slots, in correspondence of the ends of the cams furthest from the lever bridge.

The insertion means can be, for example, pegs having a shape suitable for the insertion into both the cams of the lever and the slots of the connector.

The present invention also concerns a method of connecting a connector assembly according to one of the embodiments described above; wherein the plug connection system is such that the lever, prior to the insertion of the interface, is in a position perpendicular to the direction of insertion of the interface into the connector, in the elongated configuration, and locked in both rotation and translation; the method comprises the following steps in the order described: (a) insertion of the interface into the plug connection system along the insertion direction; (b) rotational unlocking of the lever by the insertion means of the interface; (c) rotation of the lever around the pivot means, from the position perpendicular to the insertion direction of the interface into the connector, to the position parallel to the insertion direction of the interface into the connector; (d) movement of the insertion means of the interface suitable to interact with the plug connection system, so that the interface moves from the initial position within the connector, when the lever is in the position perpendicular to the direction of insertion of the interface into the connector, to the final position, in which the connector and the interface are electrically connected, when the lever is in a position parallel to the direction of insertion of the interface into the connector; step (d) occurs simultaneously with step (c); (e) translation unlocking of the lever, by means of the unlocking means; (f) pushing the bridge in a direction parallel and opposite to the direction of insertion of the interface into the connector, so that the lever reaches the shortened configuration; (g) locking the lever in the shortened configuration, so that the plug connection system and the interface are electrically connected in a safe and stable manner.

The method according to the present invention allows to use a lever according to the present invention, mounted on a connector, to enable and secure the electrical connection of the connector with an interface. The method making use of the lever according to the present invention allows a sufficient force to be applied to the interface to secure the electrical connection to the connector, while keeping the size of the connector, on which the lever is mounted, compact.

According to a further embodiment of the present invention, step (b) comprises: widening of the bridge, following the insertion of the pegs within the slots, so that the two second stoppers are no longer against the slats and that, therefore, the lever is free to rotate.

The method requires that the lever, initially mounted on the connector so that it is locked, both in rotation and translation, when the interface is inserted into the connector, is unlocked, thanks to the insertion means, at least in rotation.

According to a further embodiment of the present invention, step (d) includes: insertion of the pegs into the slots and cams, so that when the lever is in a position perpendicular to the direction of insertion of the interface into the connector, and the outer ends of the slots are in correspondence of the ends of the cams closest to the lever bridge, respectively, the interface is only partially inserted inside the connector; and when the lever is in the position parallel to the direction of insertion of the interface into the connector and the innermost ends of the slots are at the ends of the cams farthest from the lever bridge, respectively, the interface is fully inserted inside the connector and the interface and the connector are in electrical contact with each other.

Due to the configuration of the slots of the connector and the cams of the lever, the method allows to transform the rotary movement of the lever into a translation of the insertion means, and thus of the interface, in the direction of insertion of the interface into the connector.

According to a further embodiment of the present invention, step (e) comprises: lifting up the first stoppers of the lever by means of the protruding elements of the connector, so that the lever can move from the elongated configuration, to the shortened configuration.

The method allows the release of the first stoppers of the lever, and thus the release of the lever in translation, by means of the protruding means, which lift up the stoppers, so that they are no longer in contact with the protruding elements of the lever.

According to a further embodiment of the present invention, step (g) comprises: inserting the locking element of the lever into the stopper element, so as to tighten the lever in the shortened configuration.

The method involves blocking the lever in the shortened configuration when the lever is in the position parallel to the direction of insertion of the interface into the connector. This ensures that the connector and the interface are in electrical connection and cannot move from this position, even when the system is in an environment subject to strong vibration.

### BRIEF DESCRIPTION OF THE FIGURES

The present invention will be described with reference to the attached figures in which the same numbers and/or reference numbers indicate the same and/or similar and/or corresponding components of the system.
Fig. 1 shows a 3D view of a lever with CPA function, according to an embodiment of the present invention.
Fig. 2 shows a 3D view of a plug connection system according to an embodiment of the present invention.
Fig. 3 shows the plug connection system shown in Fig. 2, viewed from the front.
Fig. 3A shows an enlarged detail of Fig. 3.
Fig. 3B shows a further enlarged detail of Fig. 3.
Fig. 4A shows the plug connection system shown in Fig. 2, with an interface inserted into it, viewed from above.
Fig. 4B shows a detail of Fig. 4A, viewed from the front.
Figs. 5A to 5C show 3-D views of the plug connection system shown in Fig. 2 in which an interface is inserted, at three different stages of its use.
Fig. 6A shows Fig. 5C rotated 90° counterclockwise.
Fig. 6B shows an enlarged detail of Fig. 6A.
Fig. 7A shows Fig. 5C from a different angle.
Fig. 7B shows an enlarged detail of Fig. 7A.
Figs. 8A to 8C show 3D views of the plug connection system shown in Fig. 2 in which an interface is inserted, at a later stage of its use and from three different angles.

### DETAILED DESCRIPTION

In the following, the present invention is described by reference to particular forms of embodiment as illustrated in the drawing. However, the present invention is not limited to the particular embodiments described in the following detailed description and depicted in the figures, but rather the embodiments described simply exemplify the various aspects of the present invention, the scope of which is defined by the claims. Further modifications and variations of the present invention will appear clear to the person skilled in the art.

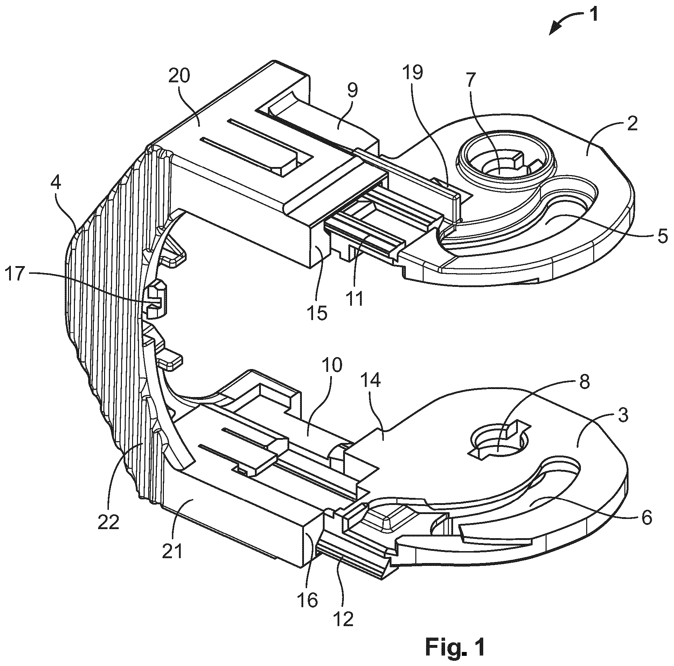

Fig. 1 shows a 3D view of a lever with a connector position assurance (CPA) function, according to an embodiment of the present invention.

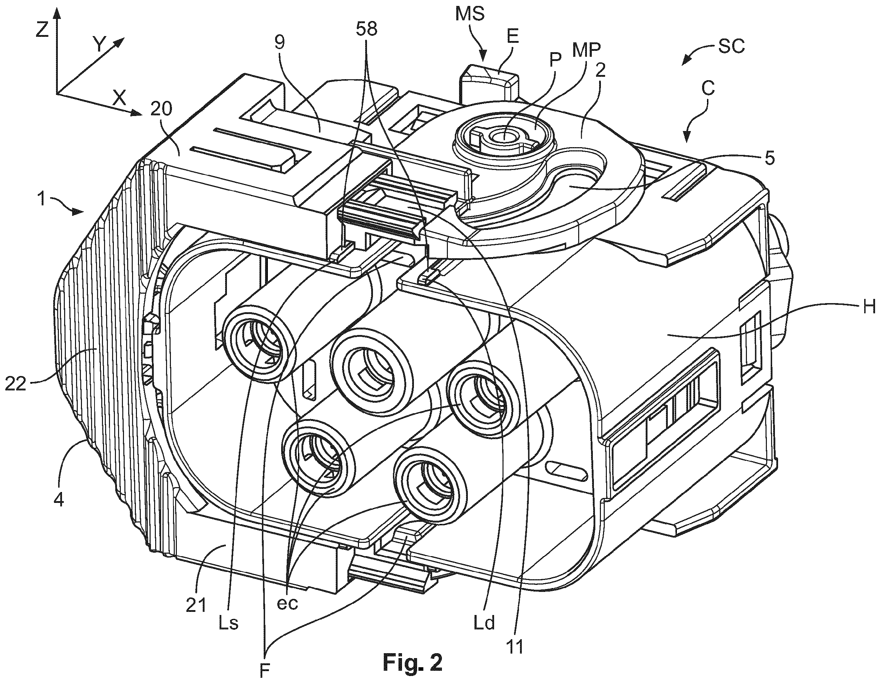

The lever 1 shown in the figure is suitable to be mounted on a connector C, shown in Fig. 2. The purpose of lever 1 is to ensure a proper electrical connection between a connector C and an interface I, shown in Fig. 2. The interface I can be, for example, the AC inlet for charging an electric car. The connector C, to which lever 1 is to be mounted, is a very compact connector, and lever 1 must be constructed so that the maximum coupling force of connector C to the interface I remains less than 75 N. Lever 1 must, in addition, ensure the proper positioning of the interface I within the connector C, even in small spaces where an operator has little area for the mounting operations.

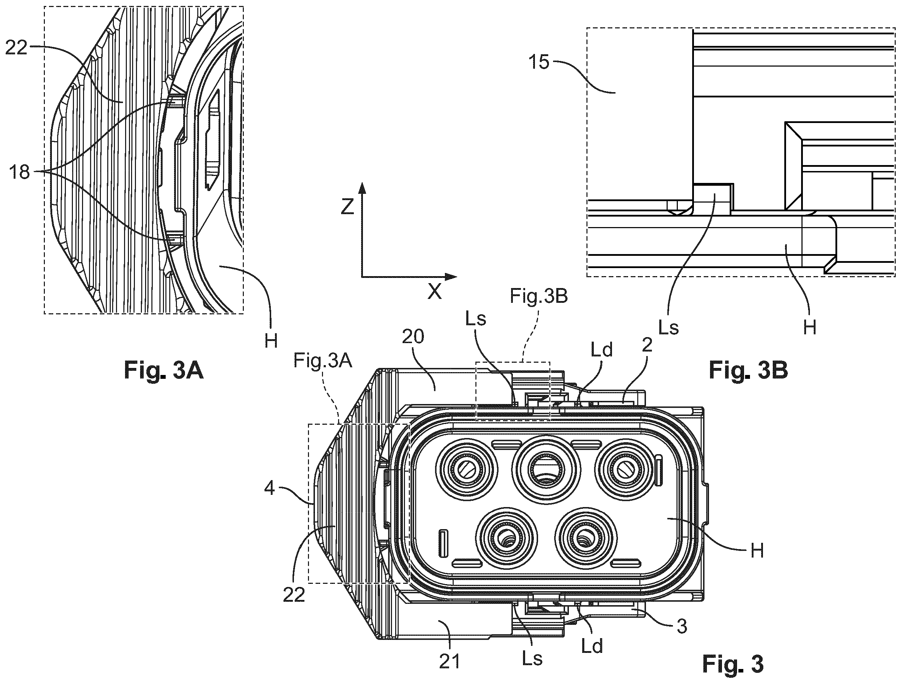

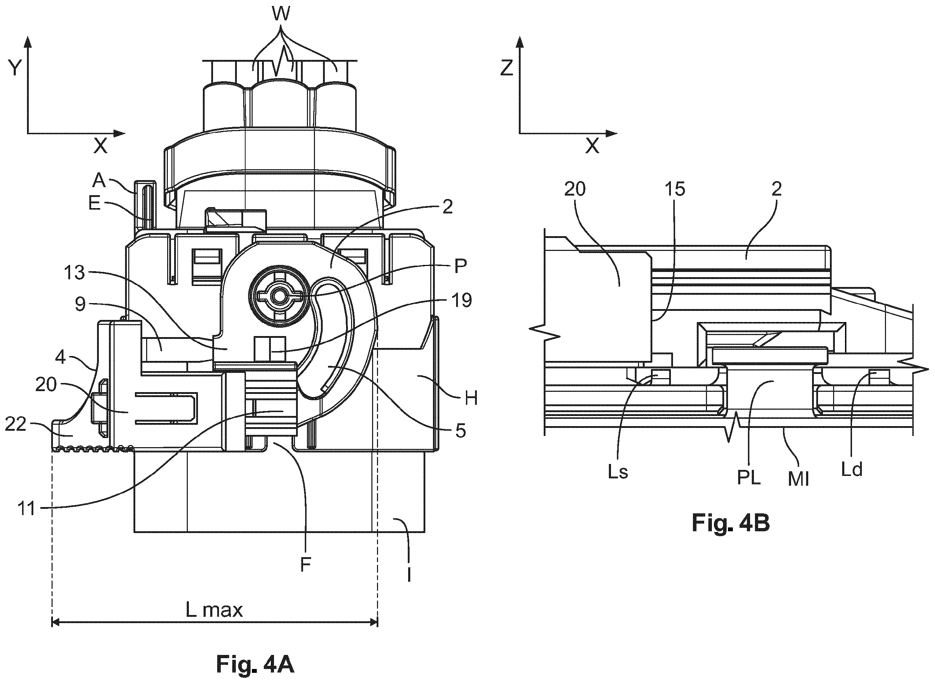

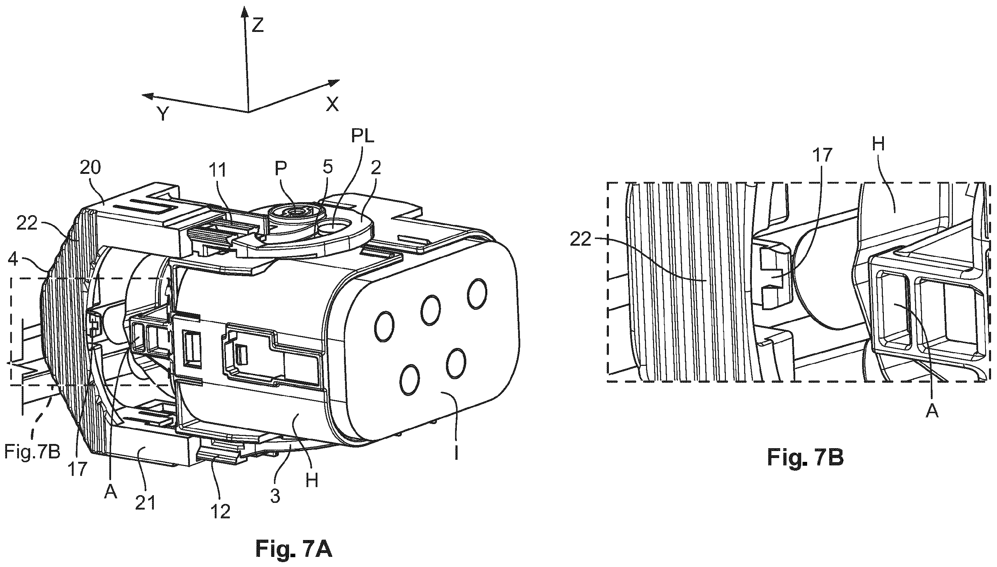

Lever 1 according to the present invention comprises two side walls 2, 3 parallel to each other and a bridge 4 joining the two side walls 2, 3. The two side walls 2, 3, which are identical to each other, have a rounded shape and each include a fulcrum cavity 7, 8, within each of which one of the two pins P of the connector C can be inserted so as to connect the lever 1 to the connector C, as explained in more detail with reference to Fig. 2. Each of the two side walls 2, 3 further comprises a cam 5, 6 each suitable to receive a peg PL of the interface I, as further explained with reference to Fig. 7A, and a rail 11, 12 suitable to slide the bridge 4 over the two side walls 2, 3, to telescopically lengthen and shorten lever 1. In addition, the two side walls 2, 3 each include a protruding portion 13, 14 that abuts against one of the two first stoppers 9, 10 of the bridge 4 of the lever 1 and that lock the lever in an elongated configuration, as described in more detail with reference to Fig. 2. In addition, the two side walls 2, 3 each include an interlocking groove 19, suitable to accommodate the two first stoppers 9, 10 of the bridge 4, respectively, when lever 1 is in the shortened configuration. Bridge 4, in addition to the first stoppers 9, 10, includes two arms 20, 21 parallel to each other and parallel to the two sidewalls 2, 3 and a handle 22 that joins the two arms 20, 21 and allows an operator to act on lever 1, so as to bring it from an elongated to a shortened configuration, as will be explained with reference to Figs. 4A to 4C. The two arms 20, 21 are respectively inserted into the two rails 11, 12 of the two side walls 2, 3 so as to allow the telescopic function of the lever 1. The two arms 20, 21 include, in addition, second stoppers 15, 16, for example, the outer end wall of each of the two arms 20, 21 that are abutted against the two slats Ls of the connector C, as best seen in Fig. 3B, when the lever is in the elongated configuration. Finally, the bridge 4 includes stopping means 18, best shown in Fig. 3A, that rest on the connector C when the lever 1 is in the shortened configuration and the locking means 17 that ensure that the lever 1 is locked on the connector C, when lever 1 is in the shortened configuration.

Fig. 2 shows a 3D view of a plug connection system according to an embodiment of the present invention.

The plug connection system SC includes a lever 1 as described in Fig. 1 and a connector C. The connector C includes a housing H having the shape of a parallelepiped, connected on one side to wires W, not shown in the figure, and on the opposite side suitable to be connected, through electrical contacts CC, to an interface I, not shown in the figure, for example the AC inlet for charging an electric car.

To simplify the description, with reference to Fig. 2 we define an orthogonal Cartesian reference system XYZ, where Y is the axis parallel to the direction of insertion of interface I inside connector C, X is the direction parallel to arms 20, 21 of lever 1, when said lever is in an elongated configuration, as will be better explained later, and Z is the direction perpendicular to the XY plane.

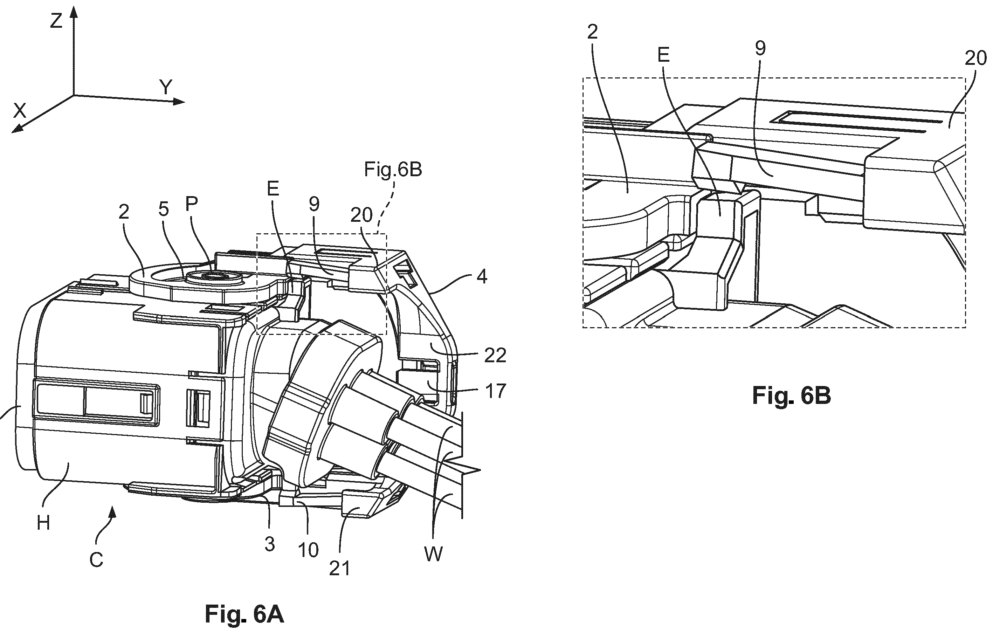

The connector C includes pivot means MP. More specifically, the housing H of connector C comprises two pins P, one for each surface of the housing H parallel to the XY plane, suitable for the insertion into the fulcrum cavities 7, 8 of the lever 1, respectively. The lever 1, under the conditions best described with reference to Figures 4A to 4C, will be able to rotate around the connector C, fixed on the two pins P. The housing H also includes, again on the two surfaces of the housing H parallel to the XY plane, two slots F parallel to each other and extending parallel to the Y direction. The slots F are intended to accommodate the two insertion means MI of the interface I, best shown in Figures 7A through 7C, when the interface I, not shown in the figure, is inserted inside connector C. In addition, the C connector includes blocking surfaces SB. More specifically, the housing H of the connector C includes, two on each surface of the housing H parallel to the XY plane, four slats Ls, Ld. The slats Ls, Ld extend parallel to the Y direction and are located on each side, respectively, of the two slots F. In addition, the connector C includes **release means** MS. More specifically, the housing H includes a protruding element **E,** which extends in the Z-direction and is suitable to lift up the first stoppers 9, 10, when the lever 1 is rotated to a position parallel to the direction Y, as will be better explained with reference to Figures 6A and 6B. Finally, the housing H includes a coupling element A, shown in detail in Figures 7A, 7B, suitable to interact with the locking means 17 of the bridge 4, to ensure the locking of the lever 1 on the connector C when the lever 1 is in shortened configuration.

Fig. 2 shows the plug connection system SC as supplied by the manufacturer, ready for use, i.e., for mounting with interface I. The lever 1 is mounted on the connector C so that it is locked in the elongated configuration, and so that arms 20, 21 of the lever 1 are parallel to the direction X, thus perpendicular to the direction of insertion of the interface I into the connector C. In this position, the lever 1 has its maximum possible length L_{MAX} of, for example, around 67mm, and cannot accidentally move to its shortened configuration. In fact, in this configuration, the second stoppers 15, 16 of the bridge 4 are abutting, respectively, against two of the slats Ls (the two Ls slats on the left of the two slots F, respectively, on the two surfaces parallel to the XY plane of the housing H) of the housing H of the connector C, so that it is impossible to slide the arms 20, 21 on their respective rails 11, 12, to shorten the lever 1. Finally, the first stoppers 9, 10 of the bridge 4 are abutted against the protruding portions 13, 14 respectively of the two side walls 2, 3 of the lever 1.

Fig. 3 shows the plug connection system shown in Fig. 2, viewed from the front.

Fig. 3 shows the plug connection system SC viewed frontally, in a plane parallel to the XZ plane from the side where the plug connection system SC is suitable to be connected to the interface I. In foreground, Fig. 3 shows the electrical contacts CC of the connector C. The lever 1 is in its initial state, locked in rotation and in an extended configuration.

Fig. 3A shows an enlarged detail of Fig. 3.

In particular, Fig. 3A shows an enlarged detail of the stopping means 18 of the handle 22 of the bridge 4. The stopping means 18 rest on the housing H of connector C and together with the first stoppers 9, 10 ensure that the lever cannot move, sliding, from its elongated configuration.

Fig. 3B shows a further enlarged detail of Fig. 3.

In particular, Fig. 3B shows an enlarged detail of the second stoppers 15 of the wall 2 of the lever 1 abutted against a slat Ls of the housing H of the connector C. When the second stoppers 15, 16 are abutted against the slats Ls, Ld of the housing H, lever 1 is locked in rotation.

Thus, the lever 1, as supplied by the manufacturer, can neither rotate around connector C on which it is mounted, nor translate, to change from the elongated configuration, in which it is when supplied, to the shortened configuration.

Fig. 4A shows the plug connection system shown in Fig. 2, with an interface inserted into it, viewed from above.

In Fig. 4 an interface I is inserted into the connector C on which a lever 1 according to the present invention is mounted. The system is shown viewed from above, that is, in a plane parallel to the XY plane.

The lever 1 is in the elongated configuration, however, the interface I has been partially inserted, into the connector C and the means of insertion MI, more specifically, the pegs PL of the interface I, best seen in Figures 7A to 7C, have been inserted, at least partially, within the slots F. the insertion of the pegs PL into slots F induces the arms 20, 21 to move away from the walls of the housing H parallel to the XY plane. The lever 1 widens and, as a consequence, the release of the second stoppers 15, 16 occurs. These, in fact, also moving away from the walls of the housing H parallel to the XY plane, are no longer abutting against the slats Ls of the housing H. The lever 1 is now free to rotate around the pins P of the housing H, no longer being blocked, in rotation, by the stoppers 15, 16.

If needed, we call to the plug connection system SC with an interface I inserted in it: connection assembly GC.

Fig. 4B shows a detail of Fig. 4A, viewed from the front.

Fig. 4B shows a detail of Fig. 4A viewed on the XZ plane. In particular, it can be seen that when the interface I is inserted inside the connector C, especially when the two pegs PL of the interface I fit into the slots F of the housing H, these cause the side walls 2, 3 to be lifted up, resulting in the widening of the arms 20, 21 of the bridge 4 and the release of the second stoppers 15, 16. Then, once the interface I has been inserted into the housing H, the lever 1 can be rotated around the pins P of the housing H of the connector C, because the second stoppers 15, 16 are automatically unlocked by the insertion of the interface I into the connector C.

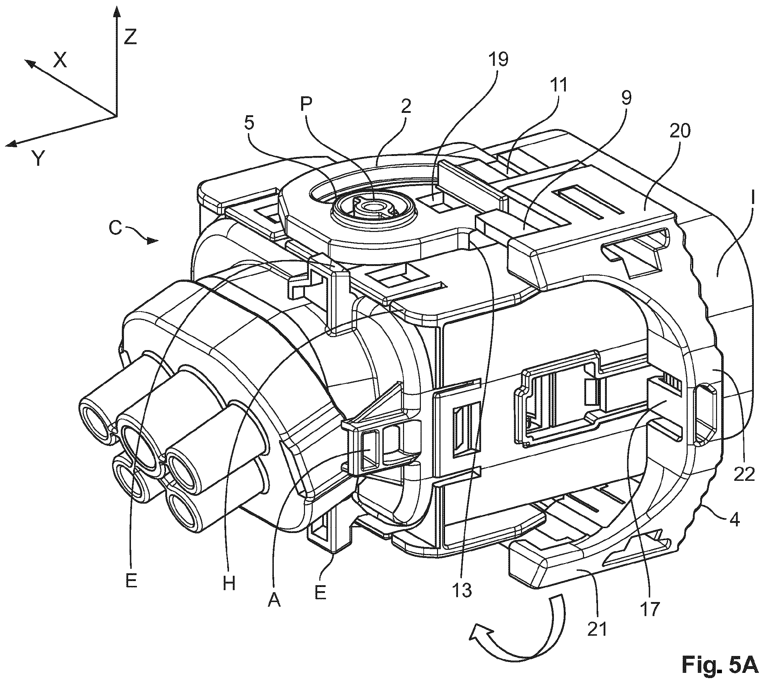

Figs. 5A to 5C show 3D views of the plug connection system shown in Fig. 2 in which an interface is inserted, at three different stages of its use.

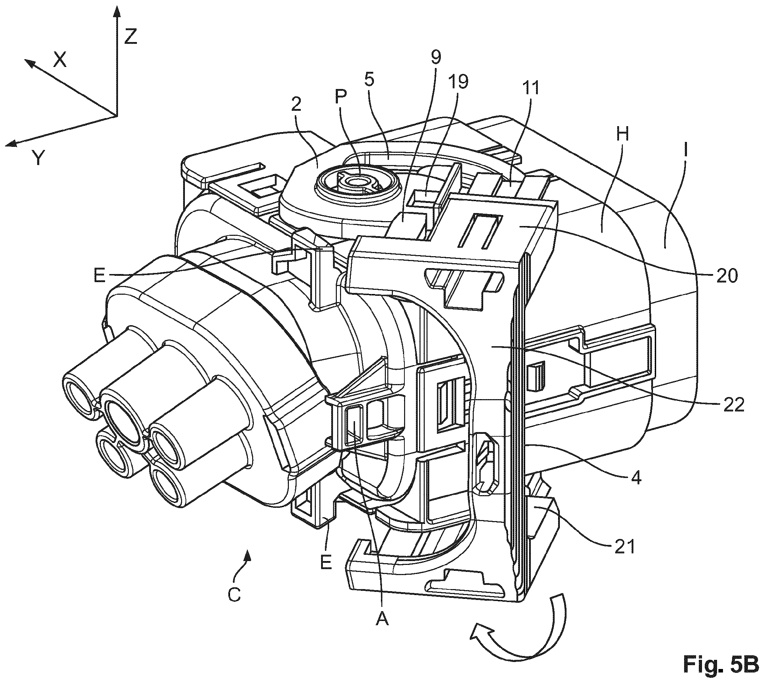

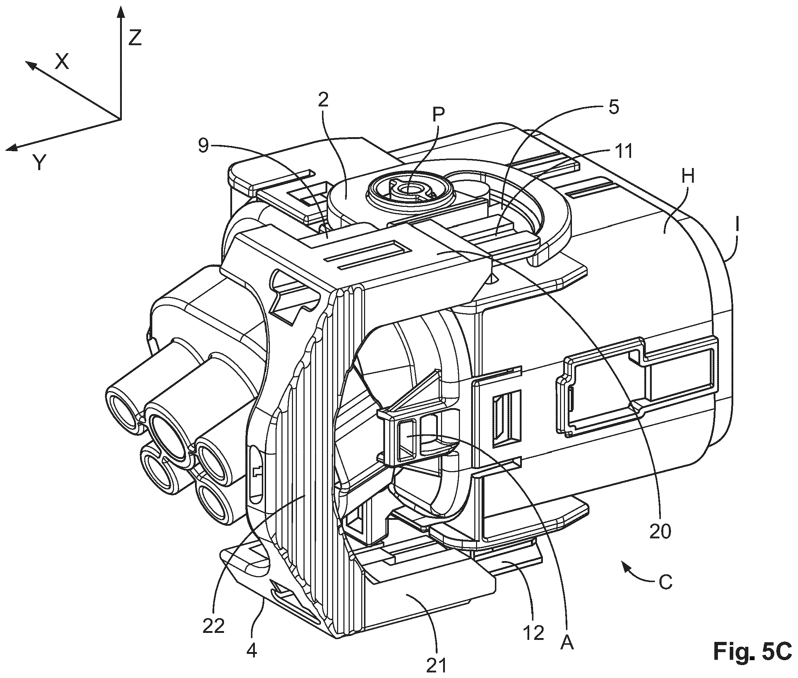

Fig. 5A shows the connection assembly GC, at an early stage of its use. The pegs PL of the interface I have unlocked the second stoppers 15, 16, as already explained with reference to Fig. 4B and an operator, who has to connect the connector C with the interface I, can act on the handle 22, so as to start rotating it counterclockwise. As soon as the lever 1 begins to rotate, the pegs PL will respectively and automatically engage the cams 5, 6, as seen more easily in Figures 5B and 5C.

Fig. 5B shows the GC connection assembly at a further stage of its use. The lever 1 was further rotated counterclockwise. In this way, the cams 5, 6 rotating with lever 1, moved the PL pegs of the interface I with it, causing the further insertion/approach of interface I inside/to the connector C.

Fig. 5C shows the GC connector assembly, in a further stage of its use. Now the lever 1 has been rotated 90° around the pins P of the connector C. In this position, the protruding element E of the housing H of the connector C has a dual function: on the one hand, it induces the lifting up of the first stoppers 9, 10, as can be seen more clearly in Figs. 6A and 6B; on the other hand, it blocks the arms 20, 21, so that the lever 1 cannot further rotate. Since the first stoppers 9, 10 are unlocked, the lever 1 can now be moved to the shortened configuration. In the shortened configuration, the lever 1 has a minimum length L_{MIN} of around 53 mm. In addition, the cams 5, 6 rotating with the lever 1, further moved the pegs PL of the interface I with it, causing further insertion/approach of the interface I within/to the connector C. When the lever 1 is rotated 90°, the interface I is inserted inside the connector C so that the two elements are in electrical connection. The displacement of the pegs PL along the Y direction is such that the insertion of the interface I into the connector C occurs with the required mating force, for example, a force not exceeding 75 N.

Fig. 6A shows Fig. 5C rotated 90° counterclockwise.

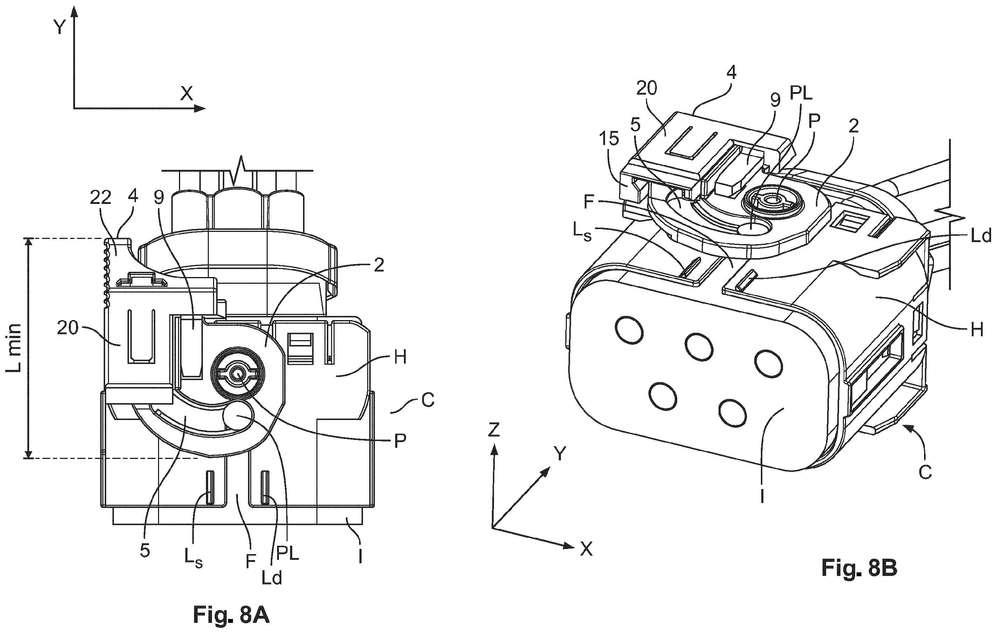

By rotating Fig. 5C 90° counterclockwise, it can be seen more clearly how the protruding elements E of the housing H act on the bridge 4 of the lever 1. More specifically, it can be seen how the protruding elements E lift up the first stoppers 9, 10, which are, therefore, no longer abutted against the protruding portions 13, 14 respectively of the two side walls 2, 3 of the lever 1. When the first stoppers 9, 10 are unlocked, the lever 1 can be moved from the extended configuration to the shortened configuration, as shown in Figs. 8A to 8C.

Fig. 6B shows an enlarged detail of Fig. 6A.

Fig. 6B shows enlarged, the first stopper 9 lifted up from the protruding element E. The first stopper 9 is no longer abutting against the protruding portion 13 of the side wall 2.

Fig. 7A shows Fig. 5C from a different angle.

In Fig. 7A, the locking means 17 of the handle 22 of the bridge 4 can be clearly seen. The locking means 17 comprise, for example, a hook, suitable to be inserted into the coupling element A of the housing H, when the lever 1 is brought into the shortened configuration. The locking means 17, when engaged, ensure that the lever 1 is closed in the shortened configuration. In fact, the locking means 17, once engaged, can only be released by using a tool, not shown in the figures. This ensures that lever 1 remains in the shortened configuration and that, as a consequence, the interface I and the connector C remain electrically connected, even when the entire system is subjected to strong stimuli and/or vibration.

Fig. 7B shows an enlarged detail of Fig. 7A.

Fig. 7B shows enlarged the locking means 17 of the lever 1 and the coupling element A of the housing H of the connector C.

Figs. 8A to 8C show 3-D views of the plug connection system shown in Fig. 2 in which an interface is inserted, at a later stage of its use and from three different angles.

Fig. 8A shows the connection assembly GC viewed from above, that is, in a plane parallel to the XY plane. The operator has now acted on the lever 1 to bring it to the shortened configuration. More specifically, the operator pushing handle 22 along the direction Y, in the opposite direction to the direction of insertion of the interface I into the connector C, moved the arms 20, 21 of the bridge 4 along the respective rails 11, 12 of the side walls 2, 3 of the lever 1. The lever 1 reached its minimum length L_{MIN}. In this way, the first stoppers 9, 10 of the bridge 4 are inserted into their respective interlocking grooves 19 in the side walls 2, 3. Similarly, the locking means 17 are inserted into the engagement element A. The lever 1 is now locked in the end position and can be opened only using a tool, not shown in the figures, on the locking means 17. The lever 1 is realized so that the cams 5, 6 have moved the pegs PL of the interface I inside the slots F of the connector C, so that the interface I is moved in the direction Y of insertion, so that the connector C and the interface I are electrically connected.

Fig. 8B shows the connection assembly GC shown in Fig. 8A, viewed from a different angle.

It can be clearly seen that the first stoppers 9 are inserted into the respective interlocking grooves 19, the arm 20 has slid on the rail 11, shortening the lever 1 and the peg PL, inserted into the cam 5, has brought the interface I into electrical contact with the connector C.

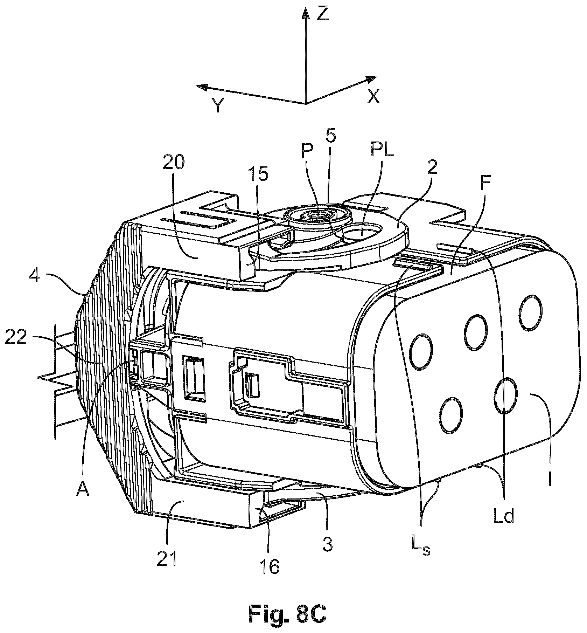

Fig. 8C shows the connection assembly GC shown in Fig. 8A, viewed from another angle.

In this case, it can be clearly seen that the locking means 17 of the handle 22 of the bridge 4 are inserted into the coupling element A of the housing H of the connector C.

The present invention further relates to a method of connecting a connector assembly GC of the type described above; the method comprises the following steps in the order described:
(a) insertion of the interface I into the plug connection system C along the X direction; the plug connection system C is such that the lever 1 is in a position perpendicular to the insertion direction Y of the interface I into the connector C, in the elongated configuration, locked by means of the first stoppers 9, 10, so that it cannot slide to the shortened configuration and locked by means of the second stoppers 15, 16 so that it cannot rotate; during this step, the two pegs P of the interface I fit into the two slots F of the housing H of the connector C;
(b) lifting up of the side walls 2, 3 of the lever 1 following the insertion of pegs P into slots F, so that the second stoppers 15, 16 of the lever 1 are no longer abutted against the slats Ls, Ld of the housing H; in this way the second stoppers 15, 16 no longer block the rotation of lever 1 around the fulcrum cavities 7, 8;
(c) initial rotation of the lever 1 around the pins P of the connector C resulting in the insertion of the two pegs PL of the interface I into the two cams 5, 6 of the lever 1, respectively;
(d) further rotation of the lever 1 until it reaches the position parallel to the insertion direction Y of the interface I in the connector C; during this step, the cams (5, 6) drag the pegs PL in the insertion direction Y, so as to cause the connector C to approach the interface I and the consequent electrical connection of the two components.
(e) lifting up of the first stoppers 9, 10 of the lever 1 via the protruding elements E of the housing H, so that the first stoppers 9, 10 are no longer abutted against the protruding portions 13, 14 of the lever 1 and the lever 1 can be moved from the extended configuration to the shortened configuration;
(f) pushing the bridge 4 in the direction parallel to and opposite to the insertion direction Y of the interface I into the connector C, so that the lever 1 reaches the shortened configuration;
(g) locking the lever 1 in the shortened configuration, by means of the locking means 17, so that the plug connection system SC and the interface I are electrically connected, in a safe and stable manner.

Although the present invention has been described with reference to the embodiments described above, it is clear to the person skilled in the art that various modifications, variations and improvements of the present invention can be realized in light of the teaching described above and within the scope of the claims, without departing from the subject matter and scope of protection of the invention.

For example, the lever can be made symmetrical to the one shown in the attached figures, so that it can be mounted on the right side of the connector, instead of the left side, according to mounting requirements.

Moreover, the lever bridge can be shaped with a different profile or ergonomic surface according to the connector packaging needs.

Finally, those aspects that are considered known by those skilled in the art have not been described in order to avoid needlessly excessively obscuring the description of the invention.

Consequently, the invention is not limited to the embodiments described above, but is only limited by the scope of protection of the appended claims.

### REFERENCE NUMBERS

- 1: lever
- 2, 3: side wall
- 4: bridge
- 5, 6: cam
- 7, 8: fulcrum cavity
- 9, 10: first stopper
- 11, 12: rail
- 13, 14: protruding portion
- 15, 16: second stoppers
- 17: locking means
- 18: stopping means
- 19: interlocking groove
- 20, 21: arms
- 22: handle
- C: connector
- H: housing
- CC: electrical contacts
- SB: blocking surfaces
- Ls, Ld: slat
- MP: pivot means
- P: pin
- F: slots
- MS: release means
- E: protruding element
- A: coupling element
- W: wires
- I: interface
- MI: insertion means
- PL: peg
- SC: plug connection system
- GC: connection assembly

## Claims

1. Lever (1) suitable to be mounted on a connector (C), suitable to be connected to an interface (I), for example, the AC inlet for charging an electric car; said lever (1) being suitable to ensure a stable electrical connection between said connector (C) and said interface (I) and comprising: two side walls (2, 3) parallel to each other and a bridge (4) joining said two side walls (2, 3); said lever (1) being **characterized in that** said bridge (4) is connected to said two side walls (2, 3) in a telescopic manner, so that said lever (1) can move from an elongated configuration, in which it has a maximum length (L_{MAX}), to a shortened configuration, in which it has a minimum length (L_{MIN}), and **in that** said lever (1) is suitable to rotate around said connector (C), from a position perpendicular to the insertion direction (Y) of said interface (I) in said connector (C), to a position parallel to said insertion direction (Y) of said interface (I) in said connector (C).

2. Lever (1) according to claim 1, wherein each of said two side walls (2, 3) respectively comprises a rail (11, 12) on which said bridge (4) can slide to shift from said elongated configuration to said shortened configuration.

3. Lever (1) according to any of the previous claims, wherein each of said two side walls (2, 3) comprises a fulcrum cavity (7, 8) suitable to allow said lever (1) to be mounted on said connector (C) and around which said lever (1) can be rotated around said connector (C).

4. Lever (1) according to any of the previous claims, wherein each of said two side walls (2, 3) comprises a cam (7, 8), each of which is suitable, once said interface (I) is inserted into said connector (C), to induce the movement in the insertion direction (Y) of said interface (I) into said connector (C), to allow the approach of said interface (I) to said connector (C) when said lever (1) is rotated about said connector (C) from said position perpendicular to the insertion direction (Y) of said interface (I) into said connector (C), to said position parallel to said insertion direction (Y) of said interface (I) into said connector (C).

5. Lever (1) according to any of the previous claims, wherein said bridge (4) comprises two first stoppers (9, 10), for example two flaps, and said two side walls (2, 3) respectively comprise two protruding portions (13, 14); wherein said first stoppers (9, 10) are each respectively abutting against one of said protruding portions (13, 14) of said two side walls (2, 3) when said lever (1) is in said elongated configuration, so as to prevent the accidental movement of said lever (1) from said elongated configuration to said shortened configuration.

6. Lever (1) according to any of the previous claims, wherein said bridge (4) comprises two second stoppers (15, 16), for example the two peripheral walls of said bridge (4), each respectively abutting against said connector (C), when said connector (C) is not connected to said interface (I); said second stoppers (15, 16) being suitable for preventing rotation of said lever (1) around said fulcrum cavities (7, 8).

7. Lever (1) according to any of the previous claims, wherein said bridge (4) further comprises locking means (17) suitable to interact with said connector (C) so as to tighten said lever (1) in said shortened configuration.

8. Plug connection system (SC) comprising a connector (C) suitable to be connected to an interface (I) and a lever (1) according to any one of the previous claims, said connector (C) comprising pivot means (MP) on which said lever (1) can be inserted and suitable to allow the rotation of said lever (1) around said connector (C), blocking surfaces (SB) suitable for blocking the rotation of said lever (1) around said connector (C) when said interface (I) is not connected to said connector (C) and said lever (1) is in a position perpendicular to said insertion direction (X), and release means (MS) suitable for unlocking said lever (1) in translation, when said lever (1) is in a position perpendicular to said insertion direction (Y) of said interface (I) in said connector (C), so that said lever (1) can move from said elongated configuration to said shortened configuration.

9. Plug connection system (SC) according to claim 8, when dependent on claim 3, wherein said pivot means (MP) comprises pins (P) on which said fulcrum cavities (7, 8) of said lever (1) can be inserted.

10. Plug connection system (SC) according to any of claims 8 or 9, when dependent on claim 4, wherein said connector (C) further comprises two slots (F), said slots (F) being suitable to intersect respectively said cams (7, 8), so that when said lever (1) is in a position perpendicular to the insertion direction (Y) of said interface (I) in said connector (C), the outer ends of said slots (F) are respectively in correspondence of the ends of said cams (7, 8) closest to the bridge (4) of said lever (1), and when said lever (1) is in said position parallel to said insertion direction (Y) of said interface (I) in said connector (C), the innermost ends of said slots (F) are respectively in correspondence of the ends of said cams (7, 8) furthest from said bridge (4) of said lever (1).

11. Plug connection system (SC) according to any of claims 8 to 10, when dependent on claim 5, wherein said release means (MS) comprise protruding elements (E) suitable to uplift said first stoppers (9, 10).

12. Plug connection system (SC) according to any of claims 8 to 11, when dependent on claim 6, wherein each of said blocking surfaces (SB) comprises slats (Ls, Ld) suitable to engage against said second stoppers (15, 16) of said lever (1), respectively, when said interface (I) is not connected to said connector (C).

13. Plug connection system (SC) according to any of claims 8 to 12, when dependent on claim 7, wherein said connector (C) comprises a coupling element (A) suitable to interact with said locking means (17) so as to tighten said lever (1) in said shortened configuration.

14. A connection assembly (GC) comprising a plug connection system (SC) according to any of claims 8 to 13 and an interface suitable (I) to connect said plug connection system (SC), wherein said interface (I) comprises insertion means (MI) suitable to interact with said plug connection system (SC), so that said interface (I) moves from an initial position within said connector (C), when said lever (1) is in a position perpendicular to the direction of insertion (Y) of said interface (I) into said connector, to an end position, in which said connector (C) and said interface (I) are electrically connected, when said lever (1) is in a position parallel to said direction of insertion (Y) of said interface (I) into said connector (C).

15. Connection assembly (GC) according to claim 14, when dependent on claim 12, wherein said insertion means (MI) comprises two pegs (PL) suitable to insert into said slots (F) of said connector (C) and into said cams (7, 8) of said lever (1), so that, when said lever (1) is in said position perpendicular to the insertion direction (Y) of said interface (I) in said connector (C), said two pegs (PL) are respectively at said outer ends of said slots (F), in correspondence of said ends of said cams (7, 8) closest to the bridge (4) of lever (1), and when said lever (1) is in said position parallel to said insertion direction (Y) of said interface (I) in said connector (C), said pegs (PL) are respectively at said innermost ends of said slots (F), in correspondence of said ends of said cams (7, 8) furthest from the bridge (4) of lever (1).

16. Method of connecting a connection assembly (GC) according to claim 14 or 15; wherein the plug connection system (SC) is such that said lever (1), prior to insertion of said interface (I), is in a position perpendicular to said insertion direction (Y) of said interface (I) into said connector (C), in said elongated configuration, and locked in both rotation and translation; said method comprising the following steps in the order described:
(a) insertion of said interface (I) into said plug connection system (SC) along said insertion direction (Y);
(b) rotational release of said lever (1) by said insertion means (MI) of said interface (I);
(c) rotation of said lever (1) around said pivot means (MP), from said position perpendicular to the insertion direction (Y) of said interface (I) in said connector (C), to said position parallel to said insertion direction (Y) of said interface (I) in said connector (C);
(d) movement of said insertion means (MI ) of said interface (I) suitable to interact with said plug connection system (SC), so that said interface (I) moves from said initial position within said connector (C), when said lever (1) is in said position perpendicular to the insertion direction (Y) of said interface (I) in said connector to said final position, wherein said connector (C) and said interface (I) are electrically connected, when said lever (1) is in said position parallel to said direction of insertion (Y) of said interface (I) into said connector (C); wherein said step (d) occurs simultaneously with said step (c);
(e) translation release of said lever (1), by means of said release means (MS);
(f) pushing of said bridge (4) in a direction parallel and opposite to said direction of insertion (Y) of said interface (I) into said connector (C), so that said lever (1) reaches the shortened configuration;
(g) locking of said lever (1) in said shortened configuration, so that said plug connection system (SC) and said interface (I) are electrically connected in a safe and stable manner.

17. Method according to claim 16, wherein said step (b) comprises: widening of said bridge (4), after the insertion of said pegs (PL) within said slots (F), so that said two second stoppers (15, 16) are no longer against said slats (Ls, Ld) and that, therefore the lever (1) is free to rotate.

18. Method according to claim 16 or 17, wherein said step (d) comprises: insertion of said pegs (PL) into said slots (F) and into said cams (5, 6), so that when said lever (1) is in a position perpendicular to the direction of insertion (Y) of said interface (I) into said connector (C) and the outer ends of said slots (F) are respectively in correspondence of the ends of said cams (7, 8) closest to the bridge (4) of said lever (1), the interface (I) is only partially inserted within the connector (C); and when said lever (1) is in said position parallel to said direction of insertion (Y) of said interface (I) into said connector (C) and the innermost ends of said slots (F) are respectively in correspondence of the ends of said cams (7, 8) farthest from said bridge (4) of said lever (1), the interface (I) is fully inserted inside the connector (C) and the interface (I) and the connector (C) are in electrical contact with each other.

19. Method according to any of the claims 16 to 18, wherein said step (e) comprises: lifting said first stoppers (9, 10) of said lever (1) by means of said protruding elements (E) of said connector (C), so that said lever (1) can move from said elongated configuration, to said shortened configuration.

20. Method according to any of claims the 16 to 19, wherein said step (g) comprises: inserting said locking member (17) of said lever (1) into said coupling member (A) so as to tighten said lever (1) in said shortened configuration.

21. Electric vehicle, for example electric car, comprising a connection assembly (GC) according to any of the claims 14 or 15, wherein said connection assembly (GC) is connected to the battery of said electric vehicle.
